# EUROPEAN PATENT APPLICATION

(11) **EP 1 459 876 A2**
(43) Date of publication of application: **22.09.2004**
(21) Application number: 03257012.9
(22) Date of filing: 06.11.2003
(51) Int. Cl.: B31C 3/00, B31F 5/06, C09J 5/00, B32B 29/00, B32B 1/08, B32B 7/10, B32B 7/14

(54) **Tube made out of pre-adhered plies**

(30) Priority: 20.03.2003 US 392679
(71) Applicant: Sonoco Development, Inc., Hartsville, South Carolina 29550 (US)
(72) Inventor: van de Camp, Johannes W., Hartsville South Carolina 29550 (US)
(74) Representative: MacDougall, Donald Carmichael

(57) **Abstract**

A wound tube (10) comprising at least two plies (11,11') having a cold seal adhesive (12) or cohesive layer (17) for bonding the plies together. The plies are wrapped spirally about an axis to form a tube (10), which may then be cut to appropriate lengths. Once formed, the tubes may be used in a variety of applications including as cores for hygienic paper rolls.

## Description

### FIELD OF THE INVENTION

The invention relates to wound multi-ply tubes and to a process for making them.

### BACKGROUND OF THE INVENTION

Spirally wound paperboard tubes and paperboard composite tubes (tubes having one or more layers of paper and/or non-paper sheet material such as plastic, foil, or the like), are used in a wide variety of applications throughout numerous industries. For example, spirally wound tubes are used as winding cores for winding filamentary materials such as yams, threads and the like, and for various disposable sheet goods such as toilet tissue, paper towels, gift-wrap, aluminum foil and other materials. Spirally wound multi-layer tubes are also used as containers for food products such as frozen juices, bread doughs, and snack products, and as forms in the building industry, e.g., for forming concrete columns and the like.

Spirally wound tubes are traditionally produced by winding continuous plies of paperboard or other sheet material around a stationary mandrel. A plurality of strips or plies are fed onto the exterior of the mandrel in a radially layered relationship. The individual plies are coated on one or both faces with glue so that each layer is adhered to each radially adjacent layer to form a cylindrical tube wall. A rotating belt contacts the exterior of the layered tube as it is formed on the mandrel and rotates the tube so that it moves spirally and longitudinally down the mandrel.

Conventionally, a liquid glue or adhesive is applied to one or both faces of a paperboard ply as the ply is advanced to the mandrel. Ply guides and tension devices guide the ply to the glue applicators and ultimately to the mandrel. Proper functioning of the glue applicator operation is essential to ensure that the liquid adhesive is applied to each ply in the appropriate amount and only in the appropriate locations. Any malfunction may result in significant material scrap and assembly line downtime. When such liquid adhesives are used, newly formed tubes tend to be relatively weak until the adhesive is fully dried, which can take up to 24 hours or more. Accordingly, it is necessary in some cases to store newly formed tubes for a period of time to allow them to fully dry thereby ensuring that radially adjacent plies adhere strongly to each other. If a newly formed tube is not adequately dried before subsequent operations are performed on the tube, the relative weakness of the tube can cause problems.

As noted, spirally wound paperboard tubes are widely used as cores for consumer rolls of various products such as toilet paper, paper towels, and others. Frequently, the manufacturer or converter of such products also makes the cores onto which the products are wound. In some cases, the manufacturer may not have particular expertise in making spirally wound cores because that is not the manufacturer's primary business. It is not uncommon for such manufacturers to employ ply guides and glue applicators that are not state-of-the-art and are not very reliable; as a result, frequent breakdowns occur during the core-making operation. It would be desirable to simplify the core-making operation so that it can be less susceptible to breaking down.

### SUMMARY OF THE INVENTION

The present invention addresses the above needs and achieves other advantages by providing a wound tube and tube manufacturing process wherein the plies are joined together with a cold seal adhesive, also referred to herein as cohesive. The cold seal adhesive is pre-applied to the plies and thus eliminates the need for an in-line adhesive application station. Such plies having pre-applied cold seal adhesive are referred to herein as "pre-adhered" plies. The use of pre-adhered plies simplifies the tube forming process and accordingly, the process is less susceptible to malfunction. The invention is particularly applicable to paperboard tubes, but can be applied to tubes formed partly or entirely of non-paperboard material.

Cold seal adhesives or cohesives are bonding compounds that adhere only to other surfaces coated with the same compound. The cohesive is applied to a surface and is allowed to dry. Once dried, the cohesive is no longer "tacky" and may contact a variety of other materials without sticking. When bonding with another surface is desired the other surface is coated with the cohesive, allowed to dry and then is pressed against the first surface. The cohesive layers adhere to one another, joining the surfaces. Cohesives are traditionally used in such applications as cereal boxes, candy bar wrappers, self-seal envelopes and protective packaging.

In accordance with one preferred embodiment of the invention, a single-ply spirally wound tube is formed by winding a ply such that opposite edge portions of the ply overlap to form a helical overlapping joint. Cohesive is disposed on one surface of the ply at one edge portion and on the opposite surface of the ply at the other edge portion. Coating the edges of the ply in this fashion allows the pre-adhered ply to be provided in the form of a roll without bonding or blocking. During tube assembly the ply is drawn from the supply roll and wound about the mandrel with the edge portions overlapping and bonding to form a cylindrical tube.

In a second preferred embodiment of the invention, a tube has two plies. At least one surface of each ply is coated partially or completely with cohesive such that when a similarly coated ply is introduced the two plies may be wound together forming a rigid tube. Coating the entire surface of a ply may be advantageous because accurately applying cohesive to only a portion of a surface may slow production. Preferably, in this preferred embodiment only a single side of each of the plies is coated so that the plies can be rolled upon themselves to form supply rolls without blocking.

To produce a tube in accordance with this embodiment, a first ply is drawn from a supply roll thereof and spirally wound about a stationary mandrel. This first ply is positioned such that the cohesive coated side faces outward, away from the mandrel. A second ply is then drawn from a second supply roll and wrapped about the mandrel, directly on top of the first ply. The second ply is positioned such that its cohesive coated side faces inward toward the first ply. The plies of the first and second layers may be offset to ensure that seams of the first layer do not align with seams of the second layer. As with the first preferred embodiment, the rotating belt draws the plies from their supply rolls and then spirally winds them about the mandrel. When the coated surfaces of the two plies make contact, their cohesive coatings form a bond that adheres the two plies together. Once formed, the resulting elongate tube may be cut into a plurality of smaller tubes of desired length.

In a third preferred embodiment of the invention, a tube comprises three or more plies. In this embodiment at least one of the plies is radially positioned between two other plies and therefore must have cohesive on both of its surfaces. A ply coated with cohesive completely on both surfaces could not be stored in roll form without blocking. As a result, in the present invention the cohesive preferably is applied to both surfaces of a ply in a pattern of strips, boxes, circles, ovals, etc., which allows the ply to readily be stored in roll form. To accomplish this, the cohesive patterns disposed on the opposite surfaces of the ply are offset relative to each other so as to allow the ply to be rolled about a spindle such that the cohesive areas on one surface align with uncoated areas on radially adjacent surfaces.

To produce multi-layer tubes in accordance with this embodiment, a first pre-adhered ply having cohesive on only one side is drawn from the supply roll and spirally wound about a stationary mandrel. A second pre-adhered ply having cohesive on both sides is then drawn from a second supply roll and is wound onto and bonded to the first ply. A third pre-adhered ply is then drawn from its supply roll and wound onto the second ply. The third ply is axially positioned relative to the second ply so that the coated areas of the second ply align with the coated areas of the third ply. A rotating belt contacts the exterior of the layered tube as it is formed on the mandrel and rotates the tube so that it moves spirally down the mandrel. Placing additional ply supply rolls at different points along the mandrel allows for further layering of the tube, providing greater wall thickness and increased tube wall strength. Once formed, the resulting elongate tube may be cut into a plurality of tubes of desired length.

There are several advantages to the present invention. Most notably, the use of plies having pre-applied cohesive eliminates the need for a conventional, liquid adhesive application station. Applying the cohesive in a controlled environment, designed solely for applying adhesives, can result in a more-uniform and consistent application than can typically be achieved when applying adhesive in a conventional in-line tube assembly process. This reliability can produce tubes with improved bond uniformity between plies. Additionally, the removal of the in-line glue applicators may reduce overall assembly line downtime by eliminating a source of assembly malfunction. Also, tubes formed in accordance with the invention have full strength as soon as they are made; no drying period is required to produce adequate tube wall strength as is required during conventional tube forming processes. The present invention introduces the pre-adhered plies to the assembly line in a fully dried state and thereby accelerates the overall rate of tube production.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
**FIG. 1** is a perspective view of a single-layer tube in accordance with one embodiment of the present invention;
**FIG. 2** is a sectional view of the cohesively bonded single-layer tube of **FIG. 1** taken along section line 2-2;
**FIG. 3** is top view of a single ply of the present invention illustrating cohesive coating on opposing edges for winding into a single-layer tube;
**FIG. 4** is a perspective view of a double-layer tube in accordance with another embodiment of the present invention;
**FIG. 5** is a sectional view of the cohesively bonded double-layer tube of **FIG. 4** taken along section line 5-5;
**FIG. 6** is a perspective view of a multi-layer tube in accordance with another embodiment of the present invention;
**FIG. 7** is a sectional view of the cohesively bonded multi-layer tube of **FIG. 6** taken along section line 7-7;
**FIG. 8** is a schematic illustration of one preferred multi-layer tube forming operation of the invention providing pre-applied cohesive plies; and
**FIG. 9** is a partially exploded view of one preferred multi-layer tube of **FIG. 6** particularly showing the interface between pre-applied cohesive strips and spirally wrapped paperboard plies.

### DETAILED DESCRIPTION OF PREFERRED EMBODIMENTS

The present inventions now will be described more fully hereinafter with reference to the accompanying drawings, in which some but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

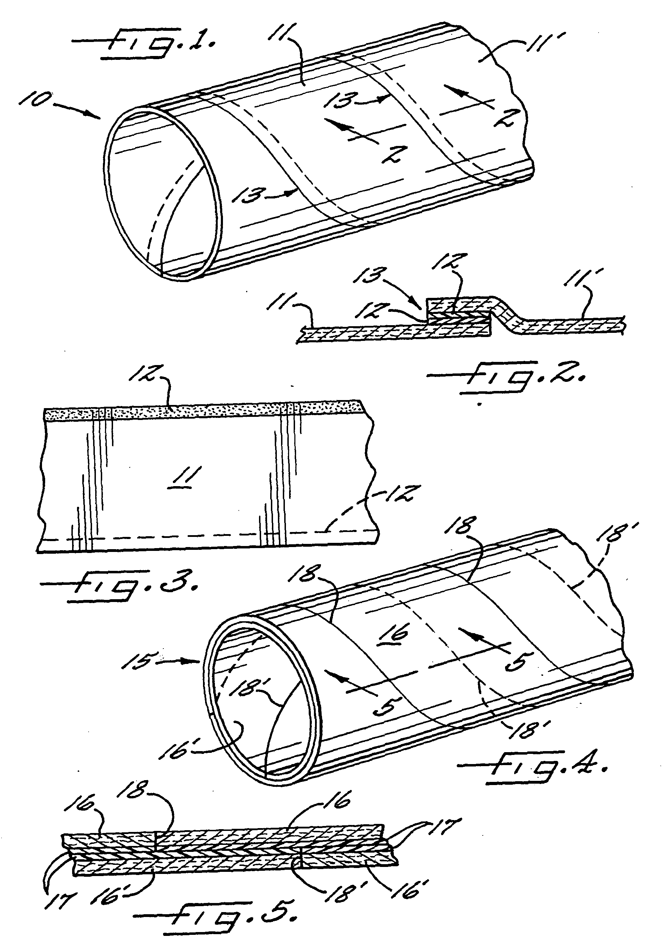

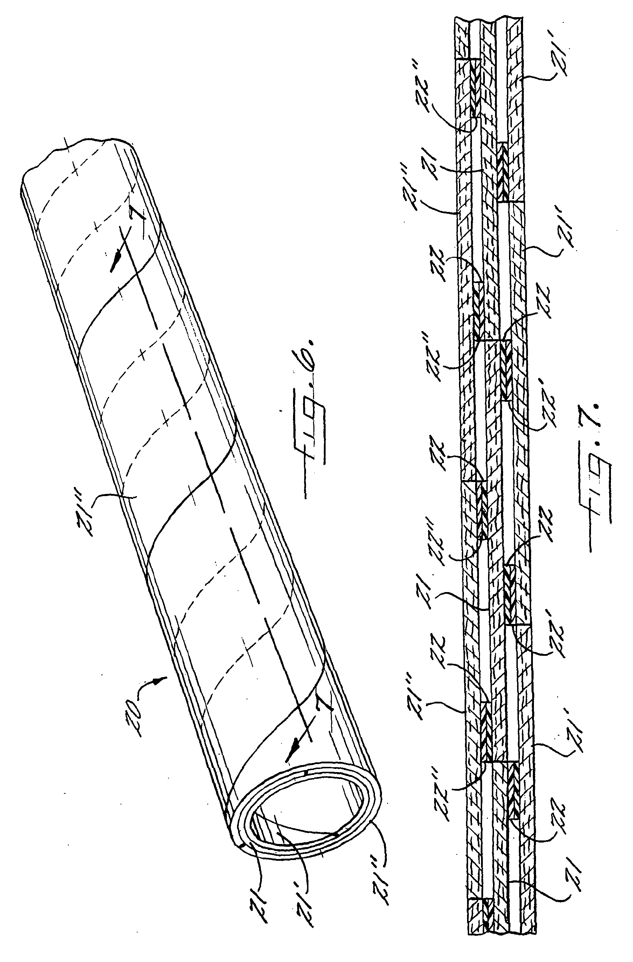

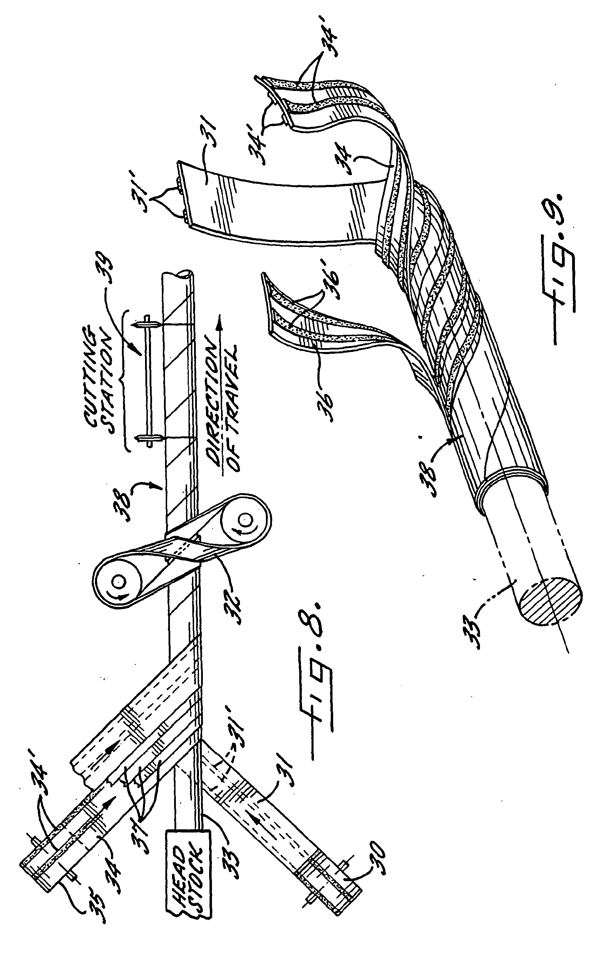

**FIG. 1** illustrates one preferred embodiment of a single-layer tube **10** produced from a single ply **11.** The tube **10** is formed by winding a single ply **11** such that opposite edge portions of the ply overlap to form a helical overlapping joint **13**. **FIG. 2** is a section view depicting this overlapping joint **13** in which a lower layer **11** and an upper layer **11'** of the same ply are bonded at their edge portions with cohesive **12**. **FIG. 3** more clearly depicts the configuration of the cohesive coating **12**, which is disposed on one side of the ply at an edge portion and on the opposite side of the ply at the other edge portion.

**FIGS. 4** and **5** illustrate another embodiment of the invention in the form of a double-layer tube **15** comprising a first ply **16** and a second ply **16'**. A cold seal adhesive layer **17** is provided on each of the first and second plies. The cold seal adhesive layers **17** are pressed together to bind the spirally wound first ply **16** to the second ply **16'** forming the cylindrical double-layer tube **15**.

**FIG. 5** is a section view of the double-layer tube **15** showing the cohesive layers **17** bonding the first ply **16** and the second ply **16**' together, and showing the butt joint or seam **18** created during the spiral winding of each ply. It should be noted that the seams of the first ply **18** and the second ply **18'** are offset relative to one another to ensure adequate structural integrity of the tube **15.**

**FIG. 6** illustrates a multi-layer tube **20** in accordance with another embodiment of the present invention. The multi-layer tube **20** has three plies **21**, **21**', **21**"; however, tubes of the present invention are not limited to three plies and may include additional plies. The plies are adhered together by cohesive strips **22** disposed on the opposing surfaces of each ply.

**FIG. 7** is a section view of the preferred multi-layer tube **20** of **FIG. 6** showing the cohesive areas or strips **22** disposed on radially adjacent surfaces of the plies. The cohesive areas are depicted in **FIG. 7** as strips, but the present invention may include other patterns of cohesively coated areas including boxes, circles, ovals, etc. The middle ply **21** has cohesive areas **22** on both of its opposite surfaces. Advantageously, to allow the middle ply to be rolled into a supply roll, the cohesive areas on one side of the ply are offset from those on the other side of the ply, as shown in **FIG. 7**, so that when the ply is rolled the cohesive areas on one side do not contact cohesive areas on the other side. 'In the illustrated embodiment the cohesive is not disposed on the outer surface of the outermost ply **21**"; however, the present invention may include tubes with an adhesive or cohesive disposed on this outer surface. Such an adhesive might be used to engage a first layer of paper or non-paper sheet material, which is to be wrapped about the tube. The outermost and innermost plies are shown as having cohesive **22** covering only part of their surfaces, but these plies could instead have cohesive entirely covering their surfaces that bond to the intermediate ply **2**1.

**FIG. 8** illustrates a preferred multi-layer tube forming process in accordance with the present invention. A first supply roll 30 of pre-adhered material is introduced to the tube forming assembly line. An individual first ply **31** is advanced from the first supply roll **30** and wound about a stationary mandrel **33**. As noted above, the first play **31** could have cohesive covering its entire outer surface rather than strips as shown. This first ply **31** is situated as shown in **FIG. 9**, such that its cohesive strips **31**' are facing outward, away from the mandrel **33**. A second ply **34** is drawn from a second supply roll **35** of pre-adhered material and wrapped about the mandrel **33**, directly on top of the first ply **31**. The second ply **34** is situated as shown in **FIG. 9,** having both surfaces coated with cohesive strips **34**'. The second ply **34** is axially positioned such that its cohesive strips **34**' align with the corresponding strips of the outer surface of the first ply **31**'. A rotating belt **32** contacts the exterior of the layered tube as it is formed on the mandrel and rotates the tube **38** so that it moves spirally down the mandrel **33**, thereby spirally winding the plies while simultaneously drawing the plies from their respective supply rolls.

A plurality of additional plies **37** may be drawn from supply rolls situated downstream of the second ply supply roll **35** and may be subsequently wrapped about the mandrel **33**. These additional plies **37** are wrapped directly upon radially adjacent plies such that their cohesive strips align with the cohesive strips of the radially adjacent plies. An outermost or final ply **36**, is then drawn from a supply roll and wrapped about the mandrel **33**. The final ply **36** may have cohesive strips on its lower surface or may have cohesive covering the entire lower surface. If the final ply **36** has strips of cohesive, it is wrapped such that its inwardly facing cohesive strips **36'** are aligned with the corresponding strips of the radially adjacent ply. The formed elongate tube **38** is then cut by a cutting apparatus **39** into a plurality of tubes of desired length.

Single-ply tubes **10** and two-ply tubes **15** of the present invention may be produced by a tube forming process similar to that described in connection with **FIG. 8**, using the appropriate number and types of plies.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A wound multi-layer tube comprising:
a plurality of plies wound about an axis one atop another and adhered together at opposing surfaces of the plies to form a wound multi-layer tube;
wherein each opposing surface that is adhered to the opposing surface of a radially adjacent ply has at least one cohesive area disposed thereon, the plies being adhered together by the alignment and intimate contact of the cohesive areas on the opposing surfaces.

2. A multi-layer tube as recited in claim 1, having two plies.

3. A multi-layer tube as recited in claim 2, wherein at least one of the two plies has a cohesive area covering the entire opposing surface of the ply.

4. A multi-layer tube as recited in claim 1, wherein said plurality of plies are made from paperboard.

5. A multi-layer tube as recited in claim 1, wherein said plurality of plies are spirally wound about the axis to form the tube.

6. A multi-layer tube as recited in claim 1, having an intermediate ply radially positioned between two other plies, wherein the intermediate ply has cohesive areas on both surfaces thereof.

7. A multi-layer tube as recited in claim 6, wherein the cohesive areas on the opposing surfaces of the intermediate ply are offset relative to one another.

8. A method of producing a multi-layer tube comprising the steps of:
advancing a plurality of plies from respective supplies thereof, each supply comprising a continuous ply having cohesive on at least one surface of the ply; and
winding the plies one atop another such that the cohesive on each ply bonds to the cohesive on radially adjacent plies so as to adhere the plies together to form a wound multi-layer tube.

9. The method of claim 8, wherein the plies are advanced from rolls of the plies.

10. The method of claim 9, wherein only two plies are wound to form the tube, each ply having cohesive on only one surface thereof.

11. The method of claim 9, wherein at least three plies are wound to form the tube, at least one of the plies having cohesive on both surfaces thereof.

12. A wound single-ply tube comprising:
a single ply wound about an axis such that opposite edge portions of the ply make overlapping contact forming a helical overlapping joint;
wherein cohesive is disposed on one side of the ply at one edge portion and on an opposite side of the ply at the other edge portion such that when the ply is wound forming the overlapping joint the edge portions are bonded together by the cohesive.
